# EUROPEAN PATENT SPECIFICATION

(11) **EP 1 235 670 B1**
(45) Date of publication and mention of the grant of the patent: **29.10.2003**
(21) Application number: 00986304.4
(22) Date of filing: 08.12.2000
(51) Int. Cl.: B27G 13/02, B26D 1/00, B02C 18/18, B02C 18/44, B29B 9/06

(54) **POLYMER CUTTING APPARATUS AND METHOD**
SCHNEIDVORRICHTUNG FÜR POLYMERSTRÄNGE UND VERFAHREN DAFÜR
APPAREIL ET PROCEDE DE COUPE DE POLYMERE

(30) Priority: 10.12.1999 US 170111 P
(43) Date of publication of application: 04.09.2002
(73) Proprietor: E.I. DU PONT DE NEMOURS AND COMPANY, Wilmington Delaware 19898 (US)
(72) Inventor: WAGGONER, Marion, G., Landenberg, PA 19350 (US); FISHER, George, F., Salem, NJ 08079 (US)
(74) Representative: Abitz, Walter, Dr.-Ing.
(86) International application number: US0033427
(87) International publication number: WO01041987

(56) References cited:
- WO-A-99/16599
- DE-A- 2 538 174
- US-A- 5 297 746

## Description

This invention concerns a rotary cutting head for cutting polymer, especially polymer strands and the like, and a process for cutting polymer using this head. Such a device is known for example from DE-A-2,538,174.

### TECHNICAL BACKGROUND

Polymers are abundant and important items of commerce, being useful in a myriad of applications. During handling, processing or reclamation of polymers it is often necessary to cut the solid (as opposed to molten) polymers into smaller pieces of various sizes and/or configurations. For instance, when thermoplastics are produced they are often cut into (uniform) pellets or granules of relatively small size so they can be easily fed to a forming machine such as an injection molding machine or an extruder. In this type of an operation it is important that the pellets produced be of reasonably uniform dimensions, and that relatively little or no other sizes such as dust or other off-size particles be produced

Cutters for polymers are available in many forms. In one common form a rotary head containing knives approximately parallel to the axis of rotation is used to cut polymer against a bed knife as the polymer is being fed into the cutter head. In these cutters the knives are such that they cut by combination of a slicing and a shearing action, with a narrow leading cutting edge cutting through the polymer. In such cutters the knife angle (see below) is typically 15-20°. This design allows for a large number of blades on a cutter head of a particular diameter, therefore increasing the cutting capacity (in weight of polymer cut per unit time) of the cutter. While cutters of this type have been popular for many years, they have certain drawbacks. Among these is cutter knife breakage and/or wear, especially when hard and/or abrasive polymers are being cut. Also particularly when hard and/or brittle polymers are being cut, cut quality is often not good, with large amounts of shattered pellets/fines, and/or long pellets and/or pellets with tails, being produced. Also when conventional cutter are being used the small knife angle makes the relatively thin knife edge prone to breakage and/or relatively fast wear. When breakage or excessive wear occurs, the cut quality is adversely affected, and the cutter must be shut down to resharpen or replace the worn or broken blades. This downtime is expensive in both actual maintenance costs and lost production time, and a polymer cutting apparatus which can cut at high speed with good cut quality, while at the same time requiring less downtime, would be advantageous.

### SUMMARY OF THE INVENTION

This invention involves a rotary cutter head having an axis of rotation, comprising, one or more knives, each knife having a cutting edge on a circumferential periphery of said rotary cutter head, each knife having a knife angle of substantially 40° to substantially 60°, and provided that no point on a cutting face of said knife is further from said axis of rotation of said rotary cutter head than said cutting edge.

Also described herein is a rotary cutter for cutting polymer, comprising, a bed knife, a rotary cutter head, and a means for advancing polymer into said rotary cutter head, and wherein said rotary cutter head has an axis of rotation and one or more knives, each knife having a cutting edge on a circumferential periphery of said rotary cutter head, each knife having a knife angle of substantially 40° to substantially 60°, and provided that no point on a cutting face of said knife is further from said axis of rotation of said rotary cutter head than said cutting edge.

This invention also concerns a process for cutting polymer with a rotary cutter, wherein the improvement comprises, using a rotary cutter head which has an axis of rotation and one or more knives, each knife having a cutting edge on a circumferential periphery of said rotary head, each knife having a knife angle of substantially 40° to substantially 60°, and provided that no point on a cutting face of said knife is further from said axis of rotation of said rotary head than said cutting edge.

### BRIEF DESCRIPTION OF THE DRAWINGS

Figure 1 shows a cross section perpendicular to the axis of rotation of part of a typical rotary cutting head of this invention, together with a bed knife, a polymer strand, and a cut polymer particle.
Figure 2 shows a cross section perpendicular to the axis of rotation of a typical rotary cutter head of this invention, and in particular the cutter head used in the Example. The diameter in mm of the cutter head used in the Example is given.
Figure 3 shows schematically important elements of a rotary cutter head of this invention, as defined herein.
Figure 4 shows the body **(25)** of the rotary cutter head used in the Example, with dimensions shown in mm.
Figures 5A and SB show one of the multiplicity of cap bars **(27)** used in the rotary cutter head of the Examples. Dimensions are in mm.
Figures 6A and 6B show one of the multiplicity of knives (**26**) used in the Example with dimensions in mm. These knives were made from tungsten carbide containing 12% nickel binder.

### DETAILS OF THE INVENTION

By a polymer herein is meant a polymer (or polymer blend) itself containing no additives, as well as polymers containing any additive or any combination of additives normally found in polymers. Such additives include pigments such as TiO₂, antioxidants, antiozonants, toughening agents, flame retardants, lubricants, dyes, antistatic agents, antistaining agents, and fillers and reinforcing agents such as talc, clay, carbon black, milled glass, glass fiber, carbon fiber, and aramid fiber. Preferred polymers are plastics (as opposed to elastomers), and thermoplastics are especially preferred. A more preferred polymer is a so-called thermotropic liquid crystalline polymer (LCP), or partially aromatic polyamide, and especially preferably the thermotropic LCP. These polymers tend to be hard and brittle, and shatter relatively easily. A thermotropic liquid crystalline polymer herein is given it conventional meaning, is an LCP by the TOT test described in U.S. Patent 4,075,262.

The polymers being cut are preferably solid polymers. By that is meant that if crystalline, they are below their crystalline melting point, and if noncrystalline (i.e., glassy) they are below their glass transition temperatures.

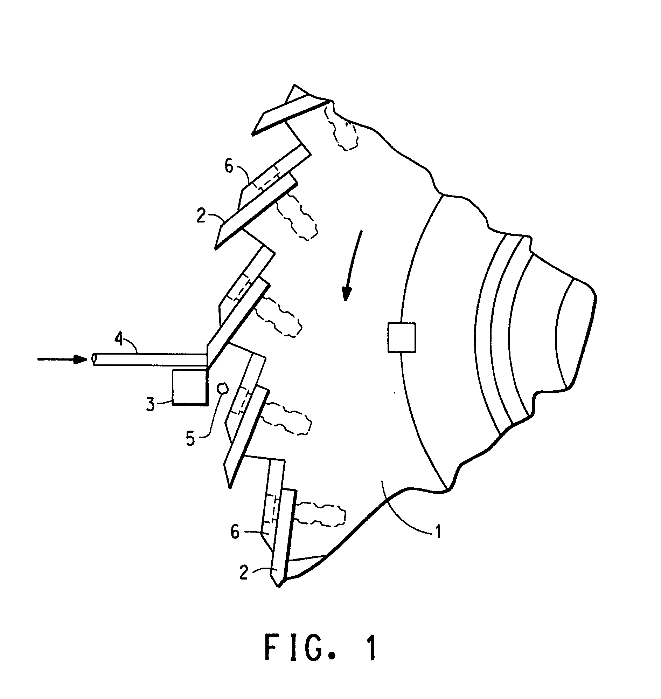

Figure 1 is a general view of a cross section of part of a rotary cutter head, and other parts of a cutting apparatus, according to this invention. The parts of the rotary cutter head shown are the rotary cutter head body **1** which rotates in the direction shown, several knives **2**, and several cap bars **6** which hold the knives in place on **1** (with bolts). Also shown is a stationary bed knife **3** whose mounting is not shown, a polymer strand **4** which is being fed in the direction shown, and a polymer granule **5** which has just been cut.

In the cutters described herein it is preferred that clearance between the cutting edge of each knife and the bed knife be as small as practicable. This tends to give the cleanest cut, and is usually about 0.025 to about 0.25 mm, preferably about 0.050 to about 0.12 mm.

Generally speaking, in such cutters the polymer is advancing into the rotor knives continuously, so after the cutting edge of each knife passes the bed knife, each cutter knife is raked away from the edge of the bed knife. In other words, the point on the knife furthest away from the axis of rotation of the rotary cutter head is normally the cutting edge of the knife, and all points on the knife cutting face are closer to the axis of rotation of the rotary cutter head than the cutting edge. Furthermore, if applicable, the rotary cutter head or its parts other than the knives are also preferably designed to allow the polymer to advance. Other designs will be obvious to the artisan to accomplish this.

The knives may be separate parts which can be removed from the rotary cutter head for sharpening or replacement, or other configurations are possible, which can be held in the rotary cutter head by bolts, caps, or wedges. Or the rotary cutter head may be a single piece of metal, with the knife edges hardened. This eliminates much machining of wedges, holes, etc., which are shown in Figure 1. This is particularly useful where the knife edges don't chip or need sharpening very often.

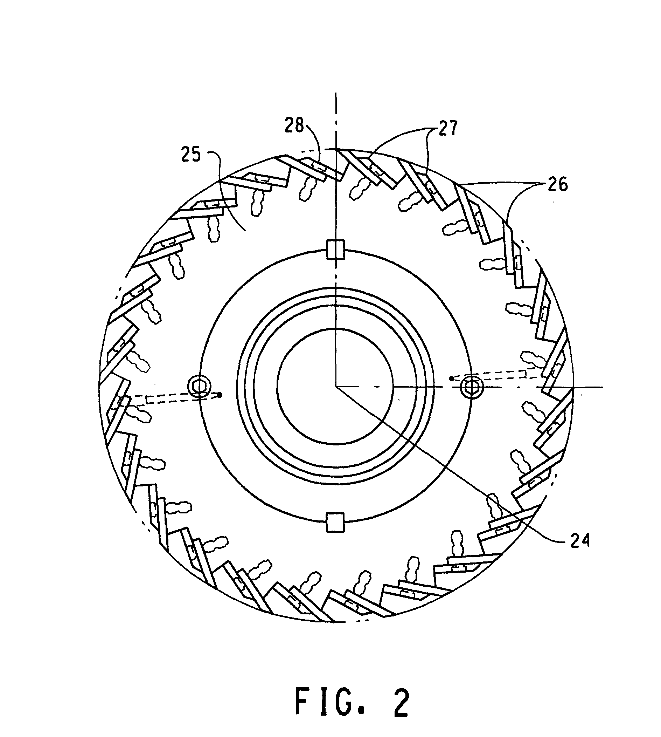

Figure 2 shows a cross section perpendicular to the axis of rotation of a full rotary cutter head according to this invention. This head has a center of rotation **24**, a body **25**, a multiplicity of knives **26**, held to the body with a multiplicity of cap bars **27**, and a multiplicity of bolts, **28**.

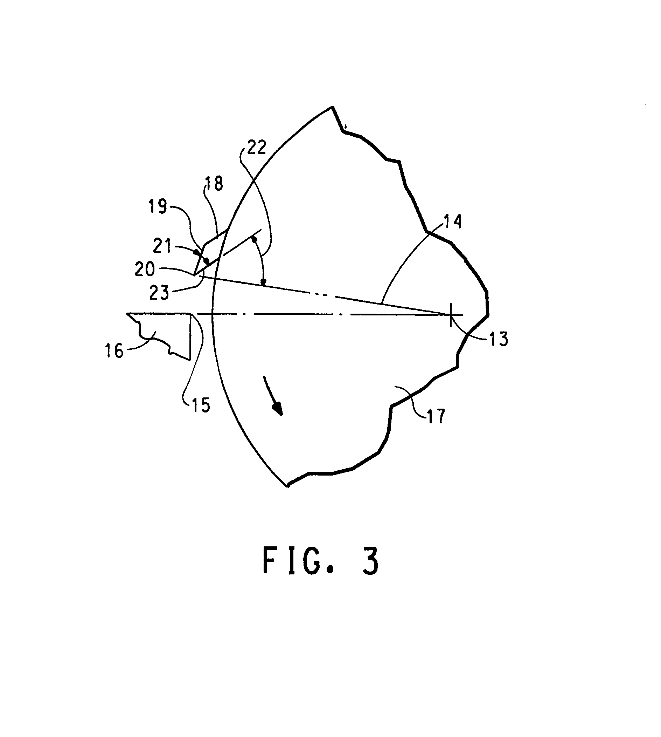

Figure 3 is a schematic diagram showing important elements of the rotary cutter head of this invention and their relationship to each other. Also included for completeness is a bed knife. The rotary head cutter of Figure 3 has an axis of rotation **13**. For convenience in explanation a dashed line **14** (which is in fact a radius) has been drawn from **13** to the cutting edge **20** of the knife **18** which is mounted on body **17**. Also included in Figure 3 is a bed knife **16** having cutting edge **15**. Protruding from the body **17** of the rotary cutter head is knife **18** (of course more than one knife may be present), which has knife cutting face **19**, and cutting edge **20**. In addition the knife also has cutting edge angle **21**, a knife forward surface **23**, and knife angle **22**. **22** is measured from a radius such as **14** extended through cutting edge **20** to knife forward surface **23**.

Normally the position of **16** and **17** will be such that **15** will be approximately parallel to **13**, and this position also will preferably minimize the clearance between **15** and **20** when the rotary cutter head is in operation.

The cutting edge angle of the knife is **21**. This angle is the angle between the knife cutting face **19** and the knife forward surface **23**. If one or both of **19** and **23** is (are) curved, then **21** is taken as the angle between the tangent and the other arm of the angle or between the two tangents, (on one or both of **19** and **23**) at **20**. The maximum value of **21** is determined by **22** and the requirement that no part of **19** be further from **13** than **20**.

**22** is the knife angle, the angle between a radius **(14)** from **13**, and **23**, and is about 40° to about 60°, preferably about 45° to about 55°, and especially preferably about 47° to about 53°. In conventional cutters this angle is believed to be typically 15-20°.

No point on **19** should be further away from **13** than, **20**, except when **20** may be worn (see below). This follows simply from the fact that one normally prefers to have **20** as close to **15** as is practicably while polymer is being cut. If any part of **19** is further from **13** than **20**, one simply will not be able to place **20** as close to **15** as is preferred, without having **19** strike **15** when **17** is rotating. Preferably **19** should be raked back sufficiently to allow the polymer to advance after **20** has passed **15**, so that the next pellet may be cut by the succeeding knife. Thus the total of **21** and **22** in degrees will normally be less than 90°. Of course as **20** suffers some wear from cutting polymer, a small portion of **19** immediately adjacent to **20** may be further from **13** than the actual edge of **20.** This is permissible, but of course when **20** becomes badly worn it will preferably be sharpened to maintain a good polymer cut quality.

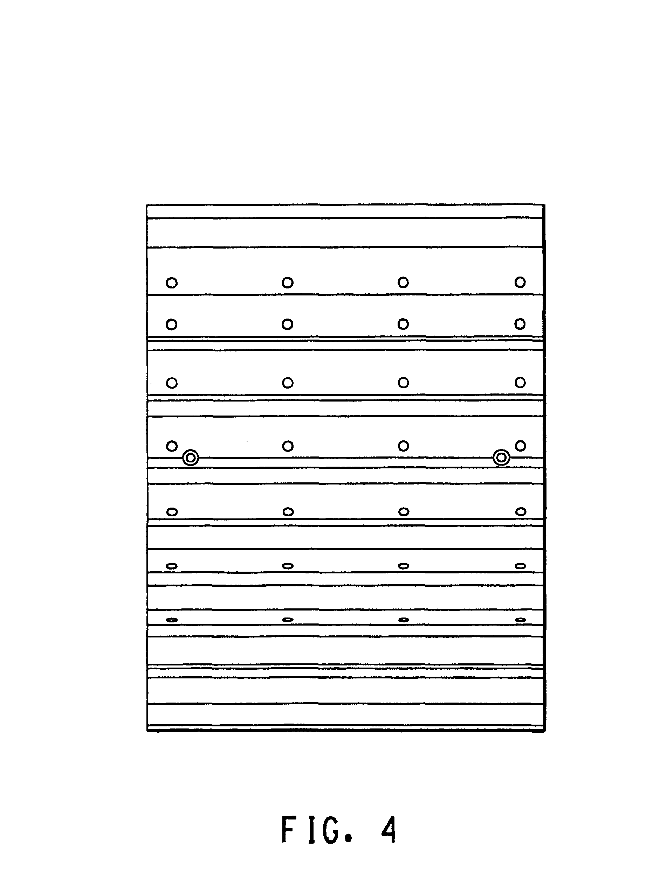

It is preferred, although not necessary, that some, and more preferably all, of the knives **18** run the full length of **17**. Provision for this is shown in Figure 4.

Across the length of **17** (perpendicular to the cross section shown in Figure 2), **20** may be parallel to **13**, or may be helically disposed to **13**. Therefore usually essentially the entire length of **20** will be at a constant distance from **13.** A preferred helical angle is about 0° to about 3° from **13**. When **17** is quite long, and for instance may be cutting many strands of polymer, the overall strain on any knife is lessened if that knife contacts the polymer strands in sequence, as it would do if the blade was helically disposed about **13**.

As mentioned above, the more blades on the cutter head, generally the larger the amount of polymer that can be cut (from strands to pellets for instance) per unit time. Thus at a given cutter head speed (rpm), the strand feed rate may be varied to obtain a given length of cut. If the number of blades on the cutter head is decreased, the feed rate of the polymer strand must be decreased and/or the speed of the cutter head increased to maintain the cut pellet size. Decreasing pellet production rate usually increases cost, so is not desirable, while increasing cutter head speed may be done, but there is usually a practical limit on this because of mechanical considerations. From geometrical considerations, at larger knife angles fewer and fewer cutting blades may be on a cutter head of a given diameter. While it may be desirable from a purely cut quality and downtime (less blade wear) perspective to have as large a knife angle as possible, the optimum knife angle will be a compromise between cut quality and/or downtime, and the productivity of the cutter.

This invention also includes an apparatus for cutting polymers which includes the rotary cutter head described above, a bed knife, and a means for advancing polymer into the rotary cutter head. The bed knife is a usually stationary item that is placed so that clearance between the knives of the rotary cutter head **17** pass as close to the bed knife as reasonably possible while the rotary cutter head is rotating. The "knife edge" of the bed knife will usually have an angle of about 90°, and serves to keep the polymer from bending or otherwise moving as the knives **18** strike the polymer. Most commonly, the polymer is fed over a surface of the bed knife into the rotary cutter head, as shown in Figure 1.

The polymer **4** is usually advanced continuously as shown in Figure 1, respectively, into the path of the knives **2** of the rotary cutter head. This requires a means for advancing the polymer. If the cutter apparatus is so disposed the polymer may "fall" into the rotary cutter head by gravity. More commonly though the polymer is fed by means of one or more pairs of feed rolls or a pair of feed conveyors. By feed rolls is meant a pair of rolls having a nip between them. Polymer is fed into the nip and the rolls are driven to move the polymer through the nip and into the rotary cutter head. A feed conveyor is similar, being a conveyor-like apparatus with two conveyor belts with the polymer being driven between the belts. The polymer may simply be fed by being extruded from a die, the movement through and out of the die being the feed mechanism to the rotary cutter head. Other methods of feeding are known.

Inherent in the above discussion is a description of a process for cutting polymer using the rotary cutter head described herein. Many different shapes of polymer may be cut, such as sheets, strands, ribbons and tubes, especially thick-walled tubes. If the polymer to be cut is too thin, such as a small diameter fiber or a thin film the polymer may bend and may or may not be cut, but even if cut the cut may not be of good quality, i.e., be ragged, generate fines (smaller particles than desired) or cut only partially or unevenly. It is preferred that the smallest cross sectional dimension of the polymer to be cut is about 1 mm or more, preferably about 2 mm or more. The maximum dimension will depend on the polymer being cut as well as the power of the cutter apparatus and the mechanical stress the cutting apparatus can endure.

One preferred form to be cut is one or more polymer strands. By a strand is meant a rod-like essentially continuous length of polymer whose largest cross sectional dimension is no more than 6 times, preferably no more than 3 times, and more preferably no more than 2 times greater than its smallest cross sectional dimension. A preferred cross sectional for a strand is approximately circular or square, with circular being especially preferred. It is preferred that the largest cross sectional dimension of the strand be about 1 to about 8 mm, preferably about 2 mm to about 4 mm. Cutting of strands into relatively short pieces, about 1 to about 8 mm long, or expressed another way the length to diameter ratio of the pellet is about 1, gives an especially useful form of polymer usually called pellets or granules. This is the most common form of solid polymer which is fed to injection molding machines, extruders, and the like.

Preferably the cutting edge of the blade is not ground as thin as possible, since this results in a weak cutting edge (because of the thin metal) which is prone to chip. Rather it is preferred that the blade edge is cylindrically ground. By this meant that the cutting edge of the blade is ground in a generally circular (arc) configuration (cylindrical land) with a given radius. Preferably this radius is about 0.10 mm to about 1.3 mm, more preferably about 0.25 mm to about 1.0 mm, and especially preferably about 0.35 mm to about 0.80 mm.

The cutter described herein gives cut polymer, especially pellets, and particularly with hard/brittle polymers which are often of a superior quality to conventional cutter, especially in regard to improving pellet uniformity and reducing dust and fines. In addition, the blades often last longer, i.e., tend to chip and/or wear less than in a conventional cutter.

### EXAMPLE

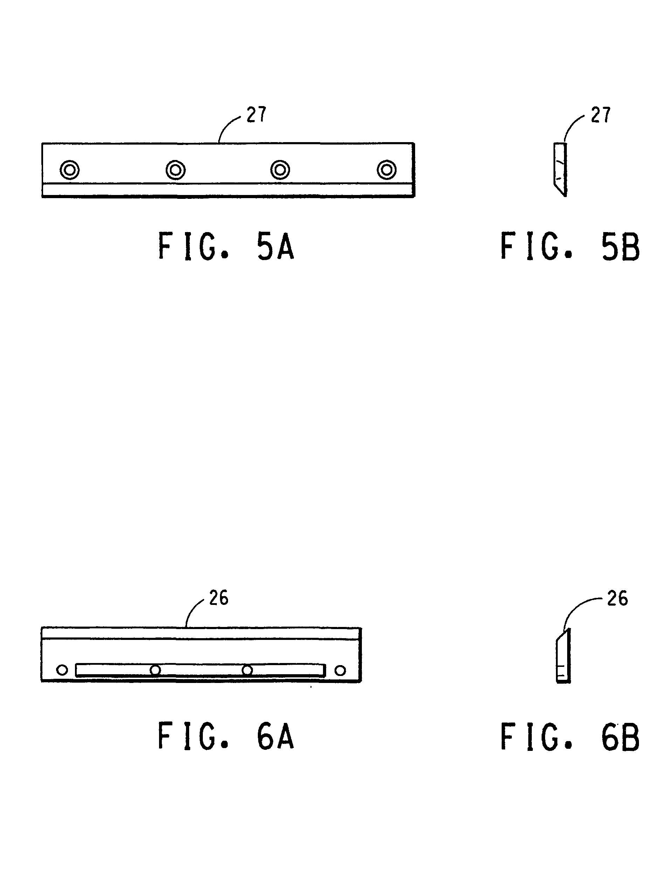

A cutter in accordance with our invention was used to cut circular cross section polymer strands using the cutter head of our invention. The cutter and various parts with their dimensions that was used is shown in Figures 2, and 4-6 (the cutter head was affixed to the rest of the cutter and rotated by a shaft passing though the head). The diameter of the strands entering the cutter was about 2.3 mm, and the length produced was also about 2.3 mm. The strands were melt extruded through die holes 4.0 mm in diameter and the strands while molten were drawn down to about 2.3 mm in diameter by the feed mechanism of the cutter. The strands were solid by the time they actually reached the cutter feed mechanism.

Over a period of slightly over 3 months a total of about 301,000 kg of various liquid crystalline polymers (LCPs) were passed through this cutter (in campaigns, not continuously), yielding about 277,000 kg of good quality pellets. Most of the LCPs has 30-40% by weight of glass fiber filler in them, as well as other materials such as carbon black or TiO₂. During this time period the bed knife was flipped or changed several times because of poor cut quality, and the rotor blades exhibited relatively little wear. However about 90% of the way (by weight) through this test, the left edge of the rotor (blades) apparently contacted the bed knife, and some chipping occurred there.

Compared to a cutter of the prior art, the knives were not dulled as quickly on this cutter, and the quality of the pellets cut was improved, especially in respect to the shape of the pellets themselves and elimination of long pellets.

While this invention has been described with respect to what is at present considered to be the preferred embodiments, it is to be understood that the inventiion is not limited to the disclosed embodiments. To the contrary, the invention is intended to cover various modifications and equivalent arrangements included within the scope of the appended claims. The scope of the following claims is to be accorded the broadest interpretation so as to encompass all such modifications and equivalent formulations and functions.

## Claims

1. A rotary cutter head (1) having an axis of rotation (13), comprising, one or more knives (2), each knife having a cutting edge (20) on a circumferential periphery of said rotary cutter head, each knife having a knife angle (21) of substantially 40° to substantially 60°, and provided that no point on a cutting face of said knife is further from said axis of rotation of said rotary cutter head than said cutting edge.

2. A rotary cutting machine for cutting polymer, comprising, a bed knife, a rotary cutter head, and a means for advancing polymer into said rotary cutter head, and wherein said rotary cutter head has an axis of rotation and one or more knives, each knife having a cutting edge on a circumferential periphery of said rotary cutter head, each knife having a knife angle of substantially 40° to substantially 60°, and provided that no point on a cutting face of said knife is further from said axis of rotation of said rotary cutter head than said cutting edge.

3. A process for cutting polymer with a rotary cutter, wherein using a rotary cutter head which has an axis of rotation and one or more knives, each knife having a cutting edge on a circumferential periphery of said rotary head, each knife having a knife angle of substantially 40° to substantially 60°, and provided that no point on a cutting face of said knife is further from said axis of rotation of said rotary head than said cutting edge.

## Patentansprüche

1. Rotierender Messerkopf (1) mit einer Rotationsachse (13), welcher ein oder mehrere Messer (2) umfasst, wobei ein jedes Messer eine Schneidkante (20) an der Begrenzungsfläche des Umfangs von jenem rotierenden Messerkopf aufweist, wobei ein jedes Messer einen Messerwinkel (21) von im Wesentlichen 40° bis im Wesentlichen 60° aufweist, und vorausgesetzt kein Punkt auf einer Schneidfläche jenen Messers ist weiter von jener Rotationsachse des rotierenden Messerkopfes entfernt als die Schneidkante.

2. Rotierende Schneidmaschine zum Schneiden von Polymer, welche umfasst; ein Grundmesser, einen rotierenden Messerkopf und eine Vorrichtung zum Vorwärtsbewegen des Polymers auf den rotierenden Messerkopf zu, wobei der rotierende Messerkopf eine Rotationsachse und ein oder mehrere Messer besitzt, von denen ein jedes Messer eine Schneidkante an der Begrenzungsfläche des Umfangs jenes rotierenden Messerkopfes aufweist, wobei ein jedes Messer einen Messerwinkel von im Wesentlichen 40° bis im Wesentlichen 60° aufweist, und vorausgesetzt kein Punkt auf einer Schneidfläche jenes Messers ist weiter von jener Rotationsachse des rotierenden Messerkopfes entfernt als die Schneidkante.

3. Verfahren zum Schneiden eines Polymers mit einem rotierenden Schneidwerkzeug, bei welchem ein rotierender Messerkopf verwendet wird, welcher eine Rotationsachse und ein oder mehrere Messer besitzt, von denen ein jedes Messer eine Schneidkante an der Begrenzungsfläche des Umfangs jenes rotierenden Kopfes aufweist, wobei eine jedes Messer einen Messerwinkel von im Wesentlichen 40° bis im Wesentlichen 60° aufweist, und vorausgesetzt kein Punkt auf einer Schneidfläche jenes Messers ist weiter von jener Rotationsachse des rotierenden Kopfes entfernt als die Schneidkante.

## Revendications

1. Une tête de coupe rotative (1) ayant un axe de rotation (13), comprenant un ou plusieurs couteaux (2), chaque couteau ayant une arête coupante (20) sur une périphérie circonférencielle de la tête de coupe rotative, chaque couteau ayant un angle de couteau (20) de pratiquement 40° à pratiquement 60°, et étant disposé de façon qu'aucun point sur une face coupante du couteau ne soit plus éloigné de l'axe de rotation de la tête de coupe rotative que l'arête coupante.

2. Une machine de coupe rotative pour couper un polymère, comprenant un couteau fixe, une tête de coupe rotative et un moyen pour faire avancer un polymère vers ladite tête de coupe rotative, et dans laquelle la tête de coupe rotative a un axe de rotation et un ou plusieurs couteaux, chaque couteau ayant une arête coupante sur une périphérie circonférencielle de la tête de coupe rotative, chaque couteau ayant un angle de couteau de pratiquement 40° à pratiquement 60°, et étant disposé de façon qu'aucun point sur une face coupante du couteau ne soit plus éloigné de l'axe de rotation de la tête de coupe rotative que l'arête coupante.

3. Un procédé pour couper un polymère avec un dispositif de coupe rotatif, dans lequel on utilise une tête de coupe rotative qui a un axe de rotation et un ou plusieurs couteaux, chaque couteau ayant une arête coupante sur une périphérie circonférencielle de la tête rotative, chaque couteau ayant un angle de couteau de pratiquement 40° à pratiquement 60°, et étant disposé de façon qu'aucun point sur une face coupante du couteau ne soit plus éloigné de l'axe de rotation de la tête rotative que l'arête coupante.
